# EUROPEAN PATENT APPLICATION

(11) **EP 4 397 924 A1**
(43) Date of publication of application: **10.07.2024**
(21) Application number: 24151042.9
(22) Date of filing: 09.01.2024
(51) Int. Cl.: F25B 25/00, F25B 41/00, F25B 49/02

(54) **REFRIGERATION SYSTEM**

(30) Priority: 09.01.2023 CN 202320060215 U
(71) Applicant: Carrier Corporation, Palm Beach Gardens, FL 33418 (US)
(72) Inventor: WANG, Qin, Shanghai 201206 (CN); LI, Haijun, Shanghai 201206 (CN); LIU, Jin, Shanghai 201206 (CN)
(74) Representative: Dehns

(57) **Abstract**

The present invention provides a refrigeration system. The refrigeration system comprises: a first circuit, wherein the first circuit is a natural cooling circuit and comprises a first evaporator; a second circuit, wherein the second circuit is a mechanical refrigeration circuit and comprises a second evaporator; and a coolant circuit, wherein the coolant circuit passes through the first evaporator and the second evaporator in sequence, and the coolant circuit further comprises a first bypass branch in parallel with the first evaporator, where a first control valve is provided on the first bypass branch. The refrigeration system according to the embodiments of the present invention has a smaller flow resistance in the mechanical refrigeration mode, thus effectively reducing the energy consumption of the coolant drive pump on the coolant flow path.

## Description

### FIELD

The present invention relates to a refrigeration system, and in particular to a refrigeration system for data center cooling.

### BACKGROUND

For data center cooling, a refrigeration system using a mechanical refrigeration module and a natural cooling module adopts a mixed refrigeration mode. The natural cooling system is used when the ambient temperature is relatively low, the mechanical refrigeration system is used when the ambient temperature is relatively high, and both are used simultaneously when the ambient temperature is moderate. The coolant exchanges heat with the natural cooling module and the mechanical refrigeration module in sequence, and is used for cooling of the load.

### SUMMARY

The object of the present invention is to solve or at least alleviate the problems existing in the prior art.

According to one aspect, a refrigeration system is provided, comprising:
a first circuit, wherein the first circuit is a natural cooling circuit and comprises a first evaporator;
a second circuit, wherein the second circuit is a mechanical refrigeration circuit and comprises a second evaporator; and
a coolant circuit, wherein the coolant circuit passes through the first evaporator and the second evaporator in sequence, and the coolant circuit further comprises a first bypass branch in parallel with the first evaporator, where a first control valve is provided on the first bypass branch.

Optionally, the first circuit comprises a drive pump, a first condenser, and the first evaporator.

Optionally, the fluid in the first circuit is antifreeze, wherein the antifreeze comprises ethylene glycol or propylene glycol.

Optionally, the first evaporator is a plate heat exchanger.

Optionally, the second circuit comprises a compressor, a second condenser, a second throttling device, and the second evaporator.

Optionally, the second evaporator is a flooded evaporator or a falling film evaporator.

Optionally, the first circuit comprises a first condenser, the second circuit comprises a second condenser, where the first condenser and the second condenser are integrated into one outdoor unit and share a fan unit.

Optionally, the first bypass branch is connected between a coolant inlet and a coolant outlet of the first evaporator.

Optionally, the refrigeration system is configured to operate in a first mode in which only the first circuit operates, a second mode in which only the second circuit operates, and a third mode in which the first circuit and the second circuit both operate.

Optionally, the first control valve is closed in the first mode and the third mode, and opened in the second mode.

Optionally, the coolant circuit further comprises a second bypass branch in parallel with the second evaporator, where a second control valve is provided on the second bypass branch.

Optionally, the second control valve is closed in the second mode and the third mode, and opened in the first mode.

Optionally, the second bypass branch is connected between a coolant inlet and a coolant outlet of the second evaporator.

Optionally, the coolant circuit further comprises a coolant drive pump and a load.

The refrigeration system according to the embodiments of the present invention has a smaller flow resistance in the mechanical refrigeration mode, thus effectively reducing the energy consumption of the coolant drive pump in the coolant circuit.

### BRIEF DESCRIPTION OF THE DRAWINGS

With reference to the accompanying drawings, the disclosure of the present invention will become easier to understand. Those skilled in the art would easily understand that these drawings are for the purpose of illustration, and are not intended to limit the protection scope of the present invention. In addition, in the figures, similar numerals are used to denote similar components, where:
FIG. 1 shows a schematic diagram of a refrigeration system according to an embodiment of the present invention; and
FIG. 2 shows a schematic diagram of a refrigeration system according to another embodiment of the present invention.

### DETAILED DESCRIPTION

It is easy to understand that according to the technical solution of the present invention, without changing the essence of the present invention, those skilled in the art can propose multiple interchangeable structures and embodiments. Therefore, the following specific embodiments and drawings are only exemplary explanations of the technical solution of the present invention, and should not be regarded as the entirety of the present invention or as limitations or restrictions on the technical solution of the present invention. In particular, the scope of protection is defined by the appended claims.

The orientation terms mentioned or possibly mentioned in the specification, such as up, down, left, right, front, back, front side, back side, top, bottom, etc., are defined relative to the structures shown in the accompanying drawings. They are relative concepts and may vary accordingly depending on their different positions and states of use. Therefore, these or other orientation terms should not be interpreted as restrictive terms.

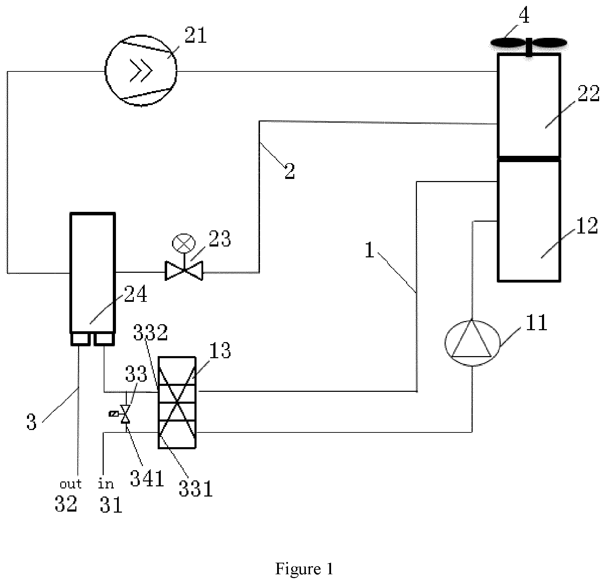

Referring first to FIG. 1, a refrigeration system according to an embodiment of the present invention is illustrated. The refrigeration system according to the embodiment of the present invention comprises: a first circuit 1 comprising a first evaporator 13, a second circuit 2 comprising a second evaporator 24, and a coolant circuit 3. Although not shown, the coolant circuit 3 comprises one or more loads, such as a data center server to be cooled.

In some embodiments, the first circuit 1 is a natural cooling circuit, in which antifreeze may be used, where the antifreeze may include ethylene glycol, propylene glycol, or other suitable types of fluid. In some embodiments, the first circuit 1 comprises a drive pump 11, a first condenser 12, and a first evaporator 13. The fluid in the first circuit 1 exchanges heat with the environment (air) at the first condenser 12, and provides cooling capacity to the coolant in the coolant circuit 3 at the first evaporator 13. In some embodiments, the first condenser 12 may be a circular tube plate fin heat exchanger.

In some embodiments, the second circuit 2 is a mechanical refrigeration circuit, which may include a compressor 21, a second condenser 22, a throttling device 23, and a second evaporator 24. Conventional refrigerant such as R22 or R-134a circulates in the second circuit 2, and transfer the cooling capacity to the coolant in the coolant circuit 3 at the second evaporator 24. In some embodiments, the first condenser 12 and the second condenser 22 of the refrigeration system can be integrated together, for example, integrated into the same outdoor unit. Besides, the first condenser 12 and the second condenser 22 can share the same fan unit 4, thereby facilitating the installation of the system.

The coolant circuit 3 passes through the first evaporator 13 and the second evaporator 24 in sequence. In other words, the first evaporator 13 and the second evaporator 24 are connected in series in the coolant circuit 3, so that the coolant can exchange heat with the fluid in the first circuit 1 and the second circuit 2, respectively. Coolant commonly used in the refrigerant circuit 3 is, for example, water or salt water. Although not shown in the figure, the coolant circuit 3 also includes a coolant drive pump and one or more loads. In addition, the coolant circuit 3 further includes a first bypass branch 341 in parallel with the first evaporator 13. A first control valve 33 is provided on the first bypass branch 341, where the first control valve 33 is used to control the on and off of the first bypass branch 341. For example, the first control valve 33 can be an electric water valve or other suitable type of valve that can be electrically controlled to connect or cut the first bypass branch 341. In some embodiments, the first bypass branch 341 can be directly connected between the coolant inlet 331 and the coolant outlet 332 of the first evaporator 13.

FIG. 1 only illustrates a portion of the coolant circuit 3, namely the portion between the inlet port 31 and the outlet port 32. As a matter of fact, the coolant circuit 3 also includes a coolant drive pump that drives the coolant to circulate in the coolant circuit 3 and one or more loads to be cooled, such as data center servers. Specifically, the refrigeration system shown is commonly used in scenarios where cooling is required all year round, such as data centers, and the refrigeration system can operate in multiple modes.

In some embodiments, when the ambient temperature is relatively low, such as in winter or at night, the refrigeration system can operate in a first mode in which only the first circuit 1 operates. At this point, the compressor 21 in the second circuit can be turned off, and the drive pump 11 in the first circuit is turned on, where the first circuit 1 alone can meet the refrigeration demand of the load. When the ambient temperature is relatively high, such as in summer or daytime, since the second condenser 12 may not be able to effectively dissipate heat to the environment, the refrigeration system can operate in a second mode in which only the second circuit 2 operates. At this point, the compressor 21 in the second circuit can be turned on, and the drive pump 11 in the first circuit is turned off. In addition, when the ambient temperature is moderate, such as in spring and autumn, the refrigeration system can operate in a third mode in which the first circuit 1 and the second circuit 2 both operate. In the third mode, the drive pump 11 and the compressor 21 are both turned on, while the coolant exchanges heat and is cooled in the first evaporator 13 and the second evaporator 24 in sequence. The refrigeration system can be configured with control devices to control the operating modes of the refrigeration system based on ambient temperature and other factors.

In the refrigeration system, especially when the first evaporator 13 is a plate heat exchanger, it may have a relatively large flow resistance, which causes the energy consumption of the drive pump in the coolant circuit 3 to increase, especially in the second mode when the first circuit is not in operation. Therefore, a first bypass branch 341 is provided, on which a first control valve 33 is arranged, so that the first evaporator 13 is bypassed when the first circuit 1 is not in operation. In some embodiments, the first control valve 33 is closed in the first mode and the third mode, and opened in the second mode, so that all the coolant passes through the first evaporator 13 in the first mode and the third mode, while most of the coolant passes through the bypass branch 341 without passing through the first evaporator 13 in the second mode. In some embodiments, in the second mode, the bypass branch 341 is configured so that at least 60% of the coolant passes through the bypass branch 341 without passing through the first evaporator 13. Optionally, in the second mode, at least 70% of the coolant passes through the bypass branch 341. Optionally, in the second mode, at least 80% of the coolant passes through the bypass branch 341. Optionally, in the second mode, at least 90% of the coolant passes through the bypass branch 341. It should be appreciated that although the flow resistance of the first evaporator 13 is relatively large, there will still be a portion of the coolant passing through it. By allowing most of the coolant to pass through the first bypass branch 341, the flow resistance of the coolant circuit 3 in the second mode is greatly lowered, thereby reducing the energy consumption of the coolant drive pump on the coolant circuit 3. Under some working conditions, such as in areas with warm climate all year round, in order to meet the cooling demand of the data center, i.e., water inlet temperature 18°C and water outlet temperature 12°C, the refrigeration system operating under the second mode counts 50% or more of all working conditions in a year. By arranging the first bypass branch 341 and the first control valve 33, the energy consumption of the coolant drive pump on the coolant circuit 3 can be reduced by more than 20%.

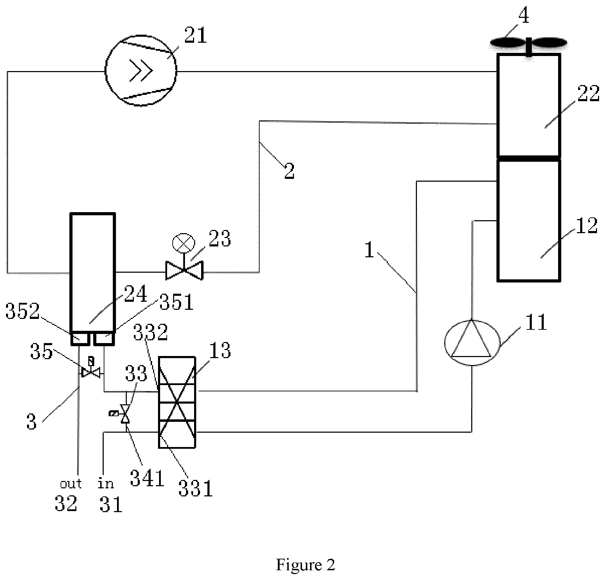

With continued reference to FIG. 2, a refrigeration system according to an alternative embodiment is shown. As to the refrigeration system according to the embodiment of FIG. 2, its operating concept is basically the same as that of the refrigeration system shown in FIG. 1, except that a second bypass branch in parallel with the second evaporator 24 is further provided in the system, and a second control valve 35 is arranged on the second bypass branch. In some embodiments, the refrigeration system is configured to allow the second control valve 35 to be closed in the second mode and the third mode, and to be opened in the first mode, so that most of the coolant does not pass through the second evaporator 24 in the first mode, thereby reducing the energy consumption of the coolant drive pump in the first mode. In some embodiments, the second bypass branch may be directly connected between the coolant inlet 351 and the coolant outlet 352 of the second evaporator. Of course, in some embodiments, in the case where the second evaporator 24 is a flooded evaporator or a falling film evaporator, a second bypass branch and a second control valve may not be provided, as the flow resistance of the second evaporator 24 is relatively small in this case. In some embodiments, the first bypass branch and the first control valve, as well as the second bypass branch and the second control valve, can be selected to be configured based on the specific application environment of the refrigeration system, such as geographical location, annual temperature curve, and the like.

The refrigeration system according to the embodiments of the present invention has a smaller flow resistance in the mechanical refrigeration mode, thus effectively reducing the energy consumption of the coolant driving pump in the coolant circuit.

The specific embodiments described above in the present invention are merely intended to describe the principles of the present invention more clearly, wherein various components are clearly shown or described to facilitate the understanding of the principles of the present invention. Those skilled in the art may, without departing from the scope of the present invention, make various modifications or changes to the present invention within the scope of the appended claims. Therefore, it should be understood that these modifications or changes falling within the scope of the appended claims should be included within the scope of patent protection of the present invention.

## Claims

1. A refrigeration system, comprising:
a first circuit, wherein the first circuit is a natural cooling circuit and comprises a first evaporator;
a second circuit, wherein the second circuit is a mechanical refrigeration circuit and comprises a second evaporator; and
a coolant circuit, wherein the coolant circuit passes through the first evaporator and the second evaporator in sequence, and the coolant circuit further comprises a first bypass branch in parallel with the first evaporator, where a first control valve is provided on the first bypass branch.

2. The refrigeration system according to claim 1, wherein the first circuit comprises a drive pump, a first condenser, and the first evaporator, where fluid in the first circuit is antifreeze comprising ethylene glycol or propylene glycol.

3. The refrigeration system according to claim 2, wherein the first evaporator is a plate heat exchanger.

4. The refrigeration system according to any of claims 1-3, wherein the second circuit comprises a compressor, a second condenser, a second throttling device, and the second evaporator, where the second evaporator is a flooded evaporator or a falling film evaporator.

5. The refrigeration system according to any of claims 1-3, wherein the first circuit comprises a first condenser, the second circuit comprises a second condenser, where the first condenser and the second condenser are integrated into one outdoor unit and share a fan unit.

6. The refrigeration system according to any of claims 1-3, wherein the first bypass branch is connected between a coolant inlet and a coolant outlet of the first evaporator.

7. The refrigeration system according to any of claims 1-3, wherein the refrigeration system is configured to operate in a first mode in which only the first circuit operates, a second mode in which only the second circuit operates, and a third mode in which the first circuit and the second circuit both operate.

8. The refrigeration system according to claim 7, wherein the first control valve is closed in the first mode and the third mode, and opened in the second mode.

9. The refrigeration system according to claim 7, wherein the coolant circuit further comprises a second bypass branch in parallel with the second evaporator, where a second control valve is provided on the second bypass branch, the second control valve is closed in the second mode and the third mode, and opened in the first mode, wherein the second bypass branch is connected between a coolant inlet and a coolant outlet of the second evaporator.

10. The refrigeration system according to claim 7, wherein the coolant circuit further comprises a coolant drive pump and a load.
